Europäisches Patentamt

(19) European Patent Office

Office européen des brevets

(11) Publication number: **0 134 089**
**B1**

(12) EUROPEAN PATENT SPECIFICATION

(45) Date of publication of patent specification: **26.04.89**

(51) Int. Cl.⁴: **B 64 F 1/18,** G 08 G 5/06

(21) Application number: **84304635.0**

(22) Date of filing: **06.07.84**

(54) Sensor and sensor system for aircraft and other vehicle ground manoeuvres.

(30) Priority: **06.07.83 GB 8318238**
**03.03.84 GB 8405625**

(43) Date of publication of application:
**13.03.85 Bulletin 85/11**

(45) Publication of the grant of the patent:
**26.04.89 Bulletin 89/17**

(84) Designated Contracting States:
**AT BE CH DE FR GB IT LI NL SE**

(56) References cited:
**AT-B- 239 685**
**DE-A-2 212 632**
**DE-A-2 324 267**
**DE-B-1 211 827**

**DER ELEKTRONIKER, no. 10, 1973 GUNSSER**
**"Die Steuerung fahrerloser Transportsysteme"**
**pages EL1 - EL7**

(73) Proprietor: **Garrington, Barry**
**Rock Cottage Ince Lane**
**Elton Chester CH2 4LU (GB)**

(72) Inventor: **Garrington, Barry**
**Rock Cottage Ince Lane**
**Elton Chester CH2 4LU (GB)**

(74) Representative: **Huntingford, David Ian et al**
**Geoffrey Owen & Company 76 Lower Bridge**
**Street**
**Chester CH1 1RU (GB)**

Courier Press, Leamington Spa, England.

## Description

The present invention relates to a visual aid system for aircraft or vehicle ground manoeuvres as specified in the preamble of claim 1 and for example as disclosed in the US—A—3 509 527 document.

Aircraft, particularly larger aircraft, require very careful manoeuvring, when on the ground, in order to ensure that they are positioned correctly for take-off or for docking. This means that a high level of skill is required from the pilot who is situated in the cockpit many feet above the ground and who does not have a full view of the aircraft.

Visual aid systems for aircraft or vehicle ground manoeuvres are known which comprise a plurality of load sensors disposed in or on the ground at a plurality of positions along a predetermined path to be followed by the aircraft or the vehicle such that the sensors are encountered by the aircraft or vehicle in proceeding along said path.

A visual aid system of this type is known from United States Patent No. 3,509,527 wherein an illuminated display device is disposed externally of a vehicle at a position forward of the vehicle when following the predetermined path, the display device being coupled to the sensors by electric circuitry and being adapted to indicate visually to the person in control of the vehicle his position relative to the path. The system of U.S. 3,509,527 acts, for example, to enable the driver of a car to line up his vehicle relative to a service bay using an array of sensors disposed transverse to the vehicle path.

It is an object of the present invention to develop the known systems to provide a visual aid system for aircraft ground manoeuvres which eliminates much of the risk involved in manoeuvring such large vehicles into a desired position.

In accordance with the present invention, this is achieved in that the predetermined path of the aircraft is arranged to be selectively illuminated by a plurality of controllable ground lights and in that the prevailing position of the aircraft is continually updated as the aircraft encounters the sensors along said path, the logic circuitry also transmitting information from the ground sensors to an air traffic control point on the ground to enable the correct ground lights corresponding to that predetermined path to be established.

Preferably, the load sensors are disposed in pairs, with the two sensors in each pair disposed respectively one on each side of said predetermined path to be followed by the aircraft, and in that said illuminated display device is adapted to display to the pilot in control of the aircraft whether the aircraft is on said path, off said path to the right or off said path to the left, in accordance with signals received from the sensors.

Preferably, the sensor units comprise a rigid elongate base for mounting in or on the ground, a rigid, elongate load-receiving member which is supported relative to the base by means of a mass of a solid, elastic compound disposed over a mass of a foam material, the elastic compound being of a nature which has substantially complete recovery after elastic deformation, and at least one proximity detector adapted to detect and respond to predetermined downward displacement of the load-receiving member towards said base caused by the application of a downward load on the latter member.

Preferably, the elastic compound encapsulates the load-receiving member so as to define between the latter member and the base a sealed space which contains said at least one detector.

Advantageously, there are two of said proximity detectors in the sensing unit, one disposed adjacent each end of the unit, respectively.

Any suitable form of proximity detector can be used, for example, an infra-red detector, Hall-effect device, inductive loop sensor, or even an hydraulically operating device, the requirement merely being to provide an output signal in response to said predetermined displacement of the load bearing member.

The relative sizes of the masses of elastic compound and the foam are chosen to suit the anticipated minimum weight of the aircraft to which the sensor unit is to respond, the greater the proportion of foam, the lighter the aircraft with which the unit can be used.

The display can, for example, have three illuminated panels, possibly in the form of coloured arrows, corresponding to "left", "centre" and "right" which can be selectively activated (flashing or steady) to indicate the instantaneous position of the aircraft. A centre-line indicator, either a complete or broken vertical line, preferably remains on all the time in order to enable the pilot to determine the position with respect to the centre-line by means of the white or coloured arrows updated as the pilot progresses towards the docking point. It is convenient for the sensing units to be arranged to respond to the passage of the aircraft nose wheel thereover, but other wheels of combination of wheels can be used to suit the circumstances.

The invention will be described further hereinafter, by way of example only, with reference to the accompanying drawings, in which:

Fig. 1 is a diagrammatic longitudinal section through one embodiment of a sensing unit for a system in accordance with the present invention;

Fig. 2 is an enlarged diagrammatic, sectional end view on the line A—A of Fig. 1;

Fig. 3 is a schematic diagram of a sensing unit in a fixed position in the ground;

Fig. 4 shows, schematically, possible positions of sensing units for use in aircraft manoeuvring;

Fig. 5 is a diagrammatic view of one embodiment of a display for a system in accordance with the present invention; and

Fig. 6 shows, schematically, possible positions of the front wheel of an aircraft on the sensing units of Fig. 4.

The present invention resides in a system wherein a display is triggered to indicate to the pilot of an aircraft, the prevailing position of the aircraft on the ground. There is also described the construction of special sensing devices for use in said system to detect the presence of an aircraft as it passes over them.

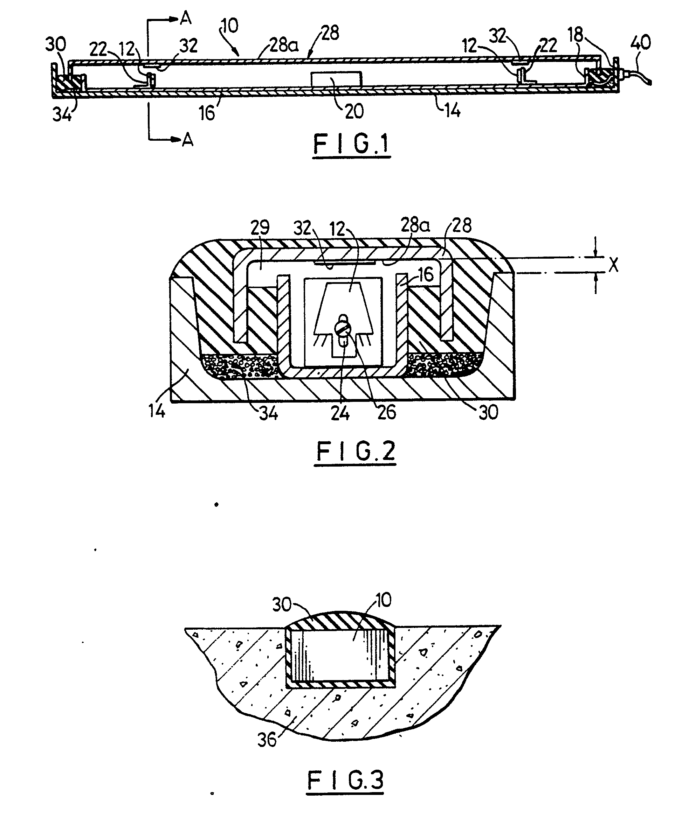

Fig. 1 shows one embodiment of a sensing unit 10 which, in this case, contains two sensing devices 12. The sensing unit 10 has an outer, trough-shaped case 14 with closed ends, which is preferably manufactured from a channel or box-section made of steel or any other suitable robust material. Inside the outer case 14 and welded thereto, as best seen in Fig. 2, is a lower part 16 of an inner case which is also of channel-section with closed ends. One end of the outer case 14 and the adjacent end of the lower part 16 of the inner case both have a cable entry hole 18 therein to allow electrical access to the two sensing devices 12, which are disposed on the base of the part 16 adjacent its two ends respectively. In this embodiment, the sensing devices 12 comprise infra red proximity detectors having associated electronic amplifiers (not shown) for amplifying the sensing signals and an associated electronic logic network. The associated electronic circuitry is indicated at 20. Each detector 12 is mounted on a small bracket 22 and is adjustable in height by means of an elongate slot 24 and a fixing screw 26.

The inner case also includes an upper part 28, of inverted channel section and closed ends, which is mounted above the lower part 16 so that its underside surface 28a is normally spaced uniformly from the upstanding side walls of the lower part 16 by a predetermined distance X. The upper part 28 is supported above the lower part 16 by means of a mass of sealant compound 30 which is placed in the space between the upstanding walls of the lower part 16 of the inner case and the upstanding walls of the outer case 14, the sealant compound 30 being disposed on top of a foam base 34. The sealant 30 is extended over the upper surfaces of the part 28 so as to fully encapsulate the inner case in a fluid-tight manner. A sealed space 29 is thereby formed between the upper and lower parts 28, 16 containing the sensing devices 12. Thus, as best seen in Fig. 2, the side walls of the upper part 28 are inset in the sealant 30 to hold the upper part 28 above the lower part 16 by said predetermined distance X.

If manufactured in metal, the casing parts are preferably zinc plated and gold passivated, with an epoxy finish.

Attached to the underside of upper part 16 and situated directly above the detectors 12 are respective stainless steel mirrors 32 which preferably have a satin finish for efficient effect and which are used for reflecting infra red which is emitted by respective emitters fixed near to, or forming part of, the detectors 12 and which is then sensed by the detectors 12. The upper part 28 is positioned at said predetermined height X above the lower part 16 in order to give the required operational spacing between the mirrors 32 and the detectors 12. This spacing is chosen in dependence upon the weight of the aircraft with which the sensing unit 10 is to be used and the sensitivity of the detectors 12. The amount of sealant 30 used and the amount of foam 34 used is governed by the load to displacement ratio required for each application. The more foam 34 and the less sealant 30 used the lighter the load which can be sensed.

The sealant 30 is preferably a polyurethane based elastomeric compound which has uniform elasticity and must have complete recovery after movement and compression. In the event of having to sense extremely heavy loads, additional springs can be placed near the detectors 12 inside the inner case to take the extra weight.

It will be appreciated that other kinds of proximity device may be used instead of the infra red devices, such as a Hall effect integrated circuit and a magnet which could be used in adverse climatic conditions which would otherwise effect the mirrors or the infra red detectors.

The individual sensor units 10 can be powered from a common D.C. power supply. In each of the units 10 there is a 12 volt D.C. stabilised regulator. The infra red emitter(s) is supplied by a current-limiting resistor. The infra red detector senses a change in distance between the stainless-steel mirrors and itself, this being arranged to cause an operational amplifier to change state from logic 0 to logic 1. This logic change is used to change the display, as described hereinbelow, by way of a suitable interface (12 volt D.C. for COSMOS or 5 volt D.C. for T.T.L. logic).

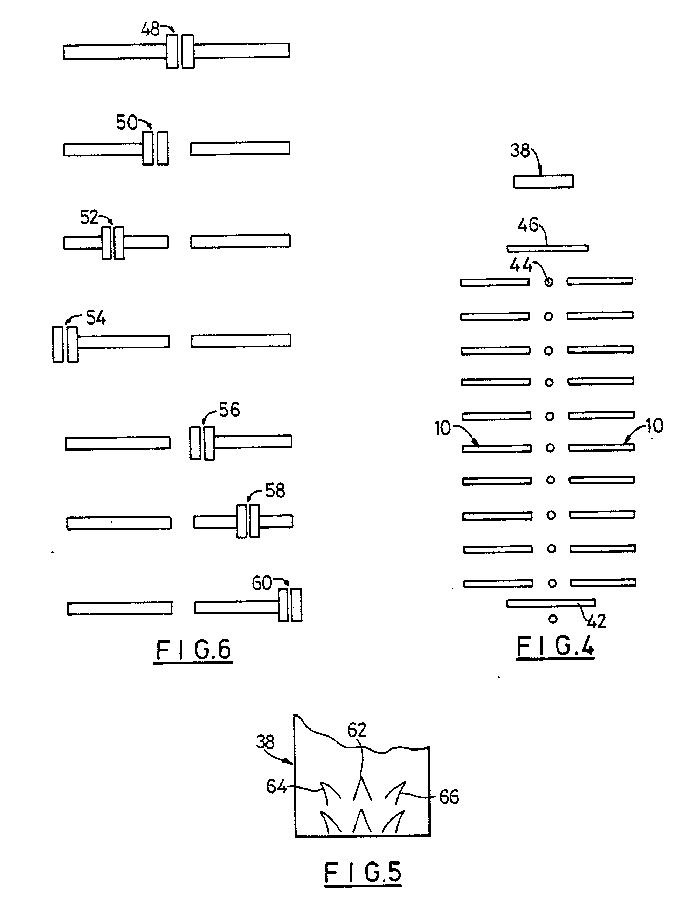

The sensing units 10 are installed in an aircraft runway or taxiway as shown in Fig. 3 and can be disposed in many different configurations. One preferred arrangement for an aircraft taxiway is shown in Fig. 4 wherein a plurality of sensor units 10 are connected to a display 38 via cables 40 (Fig. 1) to enable the display to be changed by suitable electronic circuitry, to indicate to the pilot the position of his aircraft. The display 38, which may be a zenon display of fibre optic or any other suitable illuminating device, is placed at the head of the sensing units 10 in good view of the pilot, as shown, for example, in Fig. 4. The particular display design shown diagrammatically in Fig. 5 uses illuminated arrows as position indicators and is described further hereinbelow.

It is preferable for each sensing unit 10 to contain two detectors 12, one at each end. The units 10 work in pairs for aircraft docking systems, as shown in Fig. 4, with the two sensors of each pair installed on the two sides of a centre line 44, respectively. One extra unit 10 is installed at the start and finish of the docking way. The unit 42 at the start of the docking way first senses the aircraft nose wheel as it passes over it, compressing upper part 28 of the inner case which moves down and rests on the top of lower part 16 thereby closing the gaps between the detectors 12 and the mirrors 32. This triggers a signal which is then sent from the detectors 12 enabling the display and additional lighting such as the runway or taxiway centre lights at 44 shown in Fig. 4.

As the aircraft proceeds, each unit 10 produces one or two sensor signals depending upon the position of the nose wheel on each unit 10. These signals are sent to an electronic logic unit which then generates a signal which changes the display 38 in accordance with the position of the aircraft.

As the aircraft triggers each consecutive unit 10, the electronic logic updates the display with the new information indicating to the pilot the new position of the nose wheel with respect to the centre line 44. When the aircraft reaches the end unit 46 a stop signal is displayed and the logic circuitry detects the presence of a docked aircraft after which it can switch off all the equipment such as taxiway lighting and the display 38. If an obstruction passes over the sensing units out of sequence, a stop indicator can be arranged to activate a warning to the pilot.

The sequence of events relating the particular display of Fig. 5 with the position of the nose wheel on the units 10 will now be explained in more detail with reference to Figs. 5 and 6. Fig. 6 shows a plurality of different positions the nose wheel may occupy on the units 10. In position 48 both units 10 of the pair are in use and the aircraft is centrally positioned. The central arrow indicator 62 of the display 38 then shows the aircraft nose wheel to be in a central position by remaining on or flashing on and off. In position 50 only the left-hand unit of the pair is actuated and the right-hand sensor of this unit switches on the left arrow indicator 64 on the display indicating steady left. In position 52, the left-hand unit of the pair has both detectors 12 operating together. This, again, switches on the left-hand arrow indicator 64 indicating steady left. In position 54, only the left-hand sensor of the left-hand unit is actuated and this switches the left-hand arrow indicator on so that it will flash and indicate to the pilot that he is extreme left. Positions 56, 58 and 60 provoke similar actions to positions 50, 52 and 54 respectively, but now switch on the right-hand arrow indicators 66. In this way, the pilot has a much easier job of steering into and following the correct path.

The centre indicator can remain on continuously to assist the person in control of the aircraft to determine his position with respect to the centre line by reference to the left and right indicators and whether these are activated or not.

In an advantageous development, the sensing devices 12 can be placed in the sensing units 10 so as to position the aircraft slightly to one side of the centre line 44 in order to eliminate the bumping of the aircraft on the raised centre lights.

The sensing units 10 are also used to indicate that an aircraft is turning or changing to or from a taxiway, the information being sent to a control tower for checking. To reduce the number of accidents, the sensing units 10 are also placed at taxiway junctions and, in combination with air traffic control, can thus trigger the correct set of centre lights, thus preventing a pilot taking a wrong turning.

In general, the sensor units 10 can be used singularly or in any multiple combination of such units. They can be disposed for sensing one wheel only of the aircraft or any numbers of such wheels in any combination.

To improve on safety and docking of aircraft a radio link can be employed.

One such system comprises a radio transmitter (TX) installed in each docking pad visual display. Each transmitter would have its own address code of transmission (TX). This could be derived by using five digit (or more) dual address monolithic devices, i.e. encoder and decoder.

Each aircraft would have a receiver (RX) (possibly multi-channel) display unit, a miniaturised and similar display as installed at the docking pads, together with a numerical/alphanumeric or symbolised keyboard.

The operation on approach would be as follows:

The pilot receives from air traffic control the type of docking e.g. 'Garrington's', and the address code of the docking pad where he is to park. He enters this code into his display via the keyboard; this is then stored in memory.

After he lands he follows the taxiway (illuminated) and eventually activates the sensor in the ground. The transmitter (TX) then transmits the address which is recognised by the receiver (RX) in the aircraft. The aircraft miniature display is switched on to display the aircraft position as described hereinbefore. Each sensor in turn transmits the address again followed by another exclusive code which switches the correct display, e.g. left, centre, right. All codes are individual and exclusive. All addresses are individual and exclusive in order to eliminate errors and interference from other docking pad transmitters.

Frequency spacing can also eliminate errors and TX's can be on various frequencies with air traffic control giving the correct channel to the pilot on approach, followed by the address.

**Claims**

1. A visual aid system for aircraft or vehicle ground manoeuvres, comprising a plurality of load sensors (10) disposed in or on the ground at a plurality of positions along a predetermined path to be followed by the aircraft or the vehicle such that the sensors are encountered sequentially by the aircraft or the vehicle in proceeding along said path, an illuminated display device (38) disposed externally of the aircraft or vehicle at a position forward of the aircraft or the vehicle when following said path, the display device (38) being coupled electrically to said sensors (10) by logic circuitry and being adapted to indicate visually to the pilot in control of the aircraft or the vehicle his position relative to said path, characterised in that said predetermined path is selectively illuminated by a plurality of controllable ground lights (44), and in that the prevailing position is continually updated as the aircraft encounters the sensors along said path, said logic circuitry also transmitting information from the ground sensors (10) to an air traffic control point on the ground to enable the correct ground lights (44) corresponding to that predetermined path to be established.

2. A system according to claim 1, characterised in that said load sensors (10) are disposed in pairs, with the two sensors in each pair disposed respectively one on each side of said predetermined path to be followed by the aircraft, and in that said illuminated display device (38) is adapted to display to said pilot in control of the vehicle whether the aircraft is on said path, off said path to the right or off said path to the left, in accordance with signals received from the sensors (10).

3. A system according to claim 2, characterised in that the display includes three illuminated panels (64, 62, 66), in the form of white or coloured indicators, corresponding to "left", "centre", and "right", which can be selectively activated in accordance with signals received from said sensors to indicate the instantaneous position of the aircraft on said path.

4. A system according to claim 1, 2 or 3, wherein the actuation by said aircraft of a load sensor (42) at the upstream end of said path is used as a trigger for the enablement of the visual display (38) and/or a plurality of said ground lights (44) illuminating the path itself.

5. A system according to any of claims 1 to 4, characterised in that the sensor units comprise a rigid, elongate base (14) for mounting in or on the ground, a rigid, elongate load-receiving member (28) which is supported relative to the base by means of a mass (30) of a solid, elastic compound disposed over a mass (34) of a foam material, the elastic compound (30) being of a nature which has substantially complete recovery after elastic deformation and at least one proximity detector means (12) adapted to detect and respond to predetermined downward displacement of the load-receiving member (28) towards the base (14).

6. A system according to claim 5, characterised in that the elastic compound (30) encapsulates the load-receiving member (28) to define between the latter member and the base (14) a sealed space (29), said detector means being disposed within said sealed space.

7. A system according to claim 5 or 6, characterised in that the base comprises an elongate, trough-shaped member (14) having upstanding side and end walls, the load-receiving member (28) is of inverted trough-shape, and the inverted trough-shaped load-receiving member (28) is resiliently supported above the base (14) by said solid elastic compound and said mass of foam so that its side and end walls extend downwardly towards said base.

8. A system according to claim 7, characterised in that the depending side and end walls of the load-receiving member (28) are received within the trough-shaped base (14) and are at least partially enveloped by said mass (30) of solid elastic compound.

9. A system according to claim 8, further characterised by a further elongate, trough-shaped member (16) having upstanding side and end walls and disposed on the base (14) so that, normally the upper edges of its side walls are spaced from the underside of the base of the trough-shaped load-bearing member (28) by a predetermined uniform gap (X), the resilient support for the load bearing member provided by the solid elastic material (30) and the foam material (34) permitting said gap to be reduced in dependence upon the load applied to the load beairng member (28) and said proximity detector means being adapted to respond to the magnitude of said gap.

10. A system according to any of claims 5 to 9, characterised in that the proximity detector means includes two individual proximity detector devices (12), one disposed adjacent each end of the unit respectively, whereby when a load is applied at one end only of the load-receiving member (28), only that one of the two detectors disposed adjacent that one end of the load-receiving member is actuated, when a load is applied at the other end only of the load-receiving member only that one of the two detectors disposed adjacent that other end of the load-receiving member is actuated, and when a load is applied adjacent the centre of the load-receiving member both detectors are actuated.

**Patentansprüche**

1. Sichthilfesystem für Flugzeug- oder Fahrzeug-Bodenverkehr, umfassend eine Mehrzahl von Lastsensoren (10), die in oder am Boden an einer Mehrzahl von Stellen längs einer vorgegebenen Bahn, der das Flug- oder Fahrzeug folgen soll, derart angeordnet sind, daß das Flug- oder Fahrzeug beim Vorfolgen dieser Bahn der Reihe nach auf die Sensoren trifft, sowie ein beleuchtetes Anzeigegerät (38), das außerhalb des Flug- oder Fahrzeugs an einer in Bewegungsrichtung längs der Bahn vor dem Flug- oder Fahrzeug befindlichen Stelle angeordnet, mit den Sensoren (10) über eine Logik-Schaltung elektrisch gekoppelt und so eingerichtet ist, daß es dem das Flug- oder Fahrzeug steuernden Piloten seine Position relativ zu der Bahn sichtbar anzeigt, dadurch gekennzeichnet, daß die vorgegebenen Bahn von einer Merhzahl von steuerbaren Bodenlichtern (44) selektiv beleuchtet wird, und daß, während das Flugzeug auf die Sensoren längs der Bahn trifft, die geltende Position kontinuierlich auf neuesten Stand gebracht wird, wobei die Logik-Schaltung auch Informationen von den Bodensensoren (10) auf eine am Boden befindliche Flugverkehrs-Steuerstelle überträgt, um die richtigen Bodenlichter (44) entsprechend der einzurichtenden, vorgegebenen Bahn einzuschalten.

2. System nach Anspruch 1, dadurch gekennzeichnet, daß die Lastsensoren (10) paarweise angeordnet sind, wobei von den beiden Sensoren jedes Paares jeweils einer auf jeder Seite der vorgegebenen Bahn, der das Flugzeug folgen soll, angeordnet ist, und daß das beleuchtete Anzeigegerät (38) so eingerichtet ist, daß es entsprechend von den Sensoren (10) empfangenen Signalen dem das Fahrzeug steuernden Piloten anzeigt, ob sich das Flugzeug auf der Bahn befindet oder gegenüber der Bahn nach rechts oder links versetzt ist.

3. System nach Anspruch 2, dadurch gekennzeichnet, daß die Anzeige drei beleuchtete Tafeln (64, 62, 66) in Form weißer oder farbiger Zeiger entsprechend den Positionen "Links", "Mitte" oder "Rechts" aufweist, die entsprechend von den Sensoren empfangenen Signalen selektiv aktiviert werden können, um die momentane Position des Flugzeugs auf der Bahn anzuzeigen.

4. System nach Anspruch 1, 2 oder 3, wobei die Betätigung eines am Aufang der Bahn befindlichen Lastsensors (42) durch das Flugzeug als Auslöser zum Einschalten der sichtbaren Anzeige (38) und/oder einer Mehrzahl der die Bahn selbst beleuchtenden Bodenlichter (44) verwendet wird.

5. System nach einem der Ansprüche 1 bis 4, dadurch gekennzeichnet, daß die Sensoreinheiten einen starren länglichen Sockel (14) zum Befestigen im oder an Boden umfassen, ferner ein starres längliches Lastaufnahmeelement (28), das mittels einer über einer Masse (34) aus Schaumstoff angeordneten Masse (30) aus einem festen, elastischen Material gegenüber dem Sockel abgestützt ist, wobei die elastische Masse (30) eine derartige Eigenschaft aufweist, daß sie nach elastischer Deformation im wesentlichen vollständig in ihre Ausgangslage zurückkehrt, sowie mindestens eine Näherungs-Detektoreinrichtung (12), die so ausgelegt ist, daß sie eine vorgegebene Abwärtsverlagerung des Lastaufnahmeelements (28) in Richtung des Sockels (14) erfaßt und darauf anspricht.

6. System nach Anspruch 5, dadurch gekennzeichnet, daß die elastische Masse (30) das Lastaufnahmeelement (28) umschließt und zwischen diesem und dem Sockel (14) einen abgeschlossenen Raum (29) definiert, in dem die Detektoreinrichtung angeordnet ist.

7. System nach Anspruch 5 oder 6, dadurch gekennzeichnet, daß der Sockel ein längliches, wannenförmiges Element (14) mit nach oben ragenden Seiten- und Stirnwänden umfaßt und daß das Lastaufnahmeelement (28) umgekehrtwannenförmig gestaltet und über dem Sockel (14) von der festen elastischen Masse und der Schaumstoffmasse federnd derart abgestützt ist, daß seine Seiten- und Stirnwände in Richtung des Sockels nach unten verlaufen.

8. System nach Anspruch 7, dadurch gekennzeichnet, daß die nach unten ragenden Seiten- und Stirnwände des Lastaufnahmeelements (28) innerhalb des wannenförmigen Sockels (14) liegen und von der Masse (30) aus festem, elastischem Material mindestens teilweise umschlossen sind.

9. System nach Anspruch 8, gekennzeichnet durch ein weiteres längliches, wannenförmiges Element (16) mit nach oben ragenden Seiten- und Stirnwänden, das auf dem Sockel (14) derart angeordnet ist, daß die oberen Kanten seiner Seitenwände von der Unterseite der Basis des wannenförmigen Lastaufnahmeelements (28) normalerweise einen vorgegebenen gleichmäßigen Abstand (X) aufweisen, wobei die von dem festen elastischen Material (30) und dem Schaumstoff (34) gebildete federnde Abstützung für das Lastaufnahmeelement eine Verringerung des Abstandes im Abhängigkeit von der auf das Lastaufnahmeelement (28) einwirkenden Last gestattet und die Näherungs-Detektoreinrichtung so ausgelegt ist, daß sie auf die Größe dieses Abstandes anspricht.

10. System nach einem der Ansprüche 5 bis 9, dadurch gekennzeichnet, daß die Näherungs-Detektoreinrichtung zwei einzelne Näherungs-Detektorgeräte (12) umfaßt, von denen jeweils einer in der Nähe jedes Endes der Einheit angeordnet ist, so daß dann, wenn eine Last nur auf ein Ende des Lastaufnahmeelements (28) einwirkt, nur der nahe diesem einen Ende des Lastaufnahmeelements angeordnete Detektor betätigt wird, das dann, wenn eine Last nur auf das andere Ende des Lastaufnahmeelements einwirkt, nur der nahe diesem anderen Ende des Lastaufnahmeelements angeordnete Detektor betätigt wird, und daß dann, wenn eine Last nahe der Mitte des Lastaufnahmeelements angreift, beide Detektoren betätigt werden.

## Revendications

1. Système d'aide à vue pour manoeuvres au sol d'aéronef ou véhicule, comprenant une pluralité de détecteurs de charge (10) disposés dans ou sur le sol en une pluralité de positions le long d'une trajectoire prédéterminée que doit suivre l'aéronef ou le véhicule de manière que les détecteurs soient abordés séquentiellement par l'aéronef ou le véhicule en avançant le long de ladite trajectoire, un dispositif indicateur éclairé (38) disposé à l'extérieur de l'aéronef ou du véhicule en un endroit situé devant l'aéronef ou le véhicule quand il suit ladite trajectoire, le dispositif indicateur (38) étant électriquement couplé aux dits détecteurs (10) par un circuit logique et étant agencé pour indiquer visuellement au pilote aux commandes de l'aéronef ou du véhicule sa position par rapport à ladite trajectoire, caractérisé par le fait que ladite trajectoire prédéterminée est éclairée de façon sélective par une pluralité de feux de sol (44) commandables et la position effective est actualisée de façon continue au fur et à mesure que l'aéronef aborde les détecteurs le long de ladite trajectoire, ledit circuit logique transmettant également l'information des détecteurs de sol (10) à un point au sol de contrôle du trafic aérien pour permettre aux feux de sol (44) appropriés correspondant à cette trajectoire prédéterminée d'être allumés.

2. Système selon la revendication 1, caractérisé par le fait que lesdits détecteurs de charge (10) sont disposés par paires, avec les deux détecteurs de chaque paire disposés respectivement des deux côtés de ladite trajectoire prédéterminée que l'aéronef doit suivre, et ledit dispositif indicateur éclairé (38) est agencé pour indiquer audit pilote aux commandés du véhicule si l'aéronef est sur ladite trajectoire, à droite de ladite trajectoire ou à gauche de ladite trajectoire, conformément à des signaux reçus des détecteurs (10).

3. Système selon la revendication 2, caractérisé par le fait que l'indicateur comporte trois panneaux éclairés (64, 62, 66), en forme d'indicateurs blancs ou de couleur, correspondant à "à gauche", "au centre" et "à droite", qui peuvent être actionnés de façon sélective conformément à des signaux reçus desdits détecteurs pour indiquer la position instantannée de l'aéronef sur ladite trajectoire.

4. Système selon la revendication 1, 2 ou 3, dans lequel l'actionnement par ledit aéronef d'un détecteur de charge (42) à l'extrémité amont de ladite trajectoire est utilisé comme une commande pour la mise en marche de l'indicateur visuel (38) et/ou d'une pluralité desdits feux de sol (44) éclairant la trajectoire elle-même.

5. Système selon l'une des revendications 1 à 4, caractérisé par le fait que les unités de détection comportent une base (14) rigide allongée pour la fixation dans ou sur le sol, un élément récepteur de charge (28) rigide, allongé qui est supporté par la base par l'intermédiaire d'une masse (30) d'un composé élastique solide disposé au-dessus d'une masse (34) d'un matériau en mousse, le composé élastique (30) étant d'une nature qui reprend sensiblement toute sa forme après déformation élastique et au moins un moyen de détection de proximité (12) agencé pour détecter et être sensible à un déplacement prédéterminé vers le bas de l'élément récepteur de charge (28) en direction de la base (14).

6. Système selon la revendication 5, caractérisé par le fait que le composé élastique (30) en capsule l'élément récepteur de charge (28), pour ménager entre ce dernier élément et la base (14) un espace étanche (29), ledit moyen de détection étant disposé à l'intérieur dudit espace étanche.

7. Système selon la revendication 5 ou 6, caractérisé par le fait que la base comprend un élément allongé (14) en forme de récipient pourvu de paroi verticales latérales et d'extrémité, l'élément récepteur de cahrge (28) est supporté de façon élastique au-dessus de la base (14) par ledit composé élastique solide et ladite masse de mousse de manière que ses parois latérales et d'extrémité s'étendent vers le bas en direction de ladite base.

8. Système selon la revendication 7, caractérisé par le fait que les parois latérales et d'extrémité attachées à l'élément récepteur de charge (28) sont reçues dans la base (14) en forme de récipient et sont au moins partiellement enveloppes par ladite masse (30) de composé élastique solide.

9. Système selon la revendication 8, caractérisé en outre par un autre élément allongé (16) en forme de récipient pourvu de parois verticales latérales et d'extrémité et disposé sur la base (14) de manière que, normalement, les bords supérieurs de ses parois latérales soient espacés du côté inférieur de la base de l'élément récepteur de charge (28) en forme de récipient d'un intervalle (X) uniforme prédéterminé, le support élastique de l'élément récepteur de charge procuré par le matériau élastique solide (30) et le matériau en mousse (34) permettant à cet intervalle d'être réduit en fonction de la charge appliquée à l'élément récepteur de charge (28) et ledit moyen de détection de proximité étant agencé pour être sensible à la grandeur du dit intervalle.

10. Système selon l'une des revendications 5 à 9, caractérisé par le fait que le moyen de détection de proximité comporte deux dispositifs détecteurs de proximité indépendants (12), un disposé adjacent à chaque extrémité de l'unité, respectivement de sorte que quand une charge n'est appliquée qu'à une extrémité de l'élément récepteur de charge (28), seul celui des deux détecteurs disposé adjacent à cette extrémité de l'élément récepteur de charge est actionné, quand une charge n'est appliquée qu'à l'autre extrémité de l'élément récepteur de charge celui des deux détecteurs disposé adjacent à cette autre extrémité de l'élément récepteur de charge est actionné, et quand une charge est appliquée près du centre de l'élément récepteur de charge les deux détecteurs sont actionnés.

F I G.1

F I G.2

F I G.3

FIG.6

FIG.4

FIG.5